# EUROPÄISCHE PATENTSCHRIFT

(11) **EP 0 521 273 B1**
(45) Veröffentlichungstag und Bekanntmachung des Hinweises auf die Patenterteilung: **28.09.1994**
(21) Anmeldenummer: 92108055.2
(22) Anmeldetag: 13.05.1992
(51) Int. Cl.: B60R 25/06, B60R 25/02

(54) **Verriegelungsvorrichtung zwischen einem Zündschloss und dem Wählhebel eines automatischen Kraftfahrzeuggetriebes**
Locking device for an ignition switch and the selector lever of a motor vehicle automatic gearbox
Dispositif de verrouillage entre une serrure de contact et un levier de sélection de la boîte de vitesse automatique d'un véhicule automobile

(30) Priorität: 20.06.1991 DE 4120380
(43) Veröffentlichungstag der Anmeldung: 07.01.1993
(73) Patentinhaber: Dr.Ing.h.c. F. Porsche Aktiengesellschaft, 70435 Stuttgart (DE)
(72) Erfinder: Dieden, Thomas, W-7135 Wiernsheim (DE); Plocher, Bernd, W-7407 Rottenburg (DE)

(56) Entgegenhaltungen:
- EP-A- 0 315 173
- EP-A- 0 315 174
- US-A- 4 967 883

## Beschreibung

Die Erfindung betrifft eine Verriegelungsvorrichtung gemäß dem Oberbegriff des Patentanspruches 1.

Aus der EP-0 315 174 A1 ist eine gattungsgemäße Verriegelungsvorrichtung bekannt, bei der an einem in verschiedene Stellungen schwenkbaren Wahlhebel eine manuell zu betätigende Taste angeordnet ist. Mit dieser Taste ist ein verschiebbarer Sperrstift gekoppelt, der in Aussparungen einer Kulisse eingreift und dabei den Wählhebel in einer Parkstellung bei nicht betätigter Taste festlegt.

Bei dem Verschwenken mit betätigter Taste in die Parkstellung greift der Sperrstift in ein Schiebestück ein, welches beim Lösen der Taste mittels des Sperrstiftes verschoben wird.

Ein Zündschloß wirkt über ein flexibles Gestänge mittels eines wählhebelseitig gelagerten Sperrschiebers auf das Schiebestück einerseits derart ein, daß nur bei in Parkstellung festgelegtem Wählhebel das Zündschloß in eine das Abziehen des Zündschlüssels gestattende Stellung verdrehbar ist, wobei der Sperrschieber in eine das Schiebestück sperrende Stellung verschoben wird. Andererseits ist der Wählhebel in dieser Stellung so lange gesperrt, bis der Zündschlüssel das Zündschloß in eine Betriebsstellung verdreht hat und ein Bremspedal betätigt wurde, wodurch eine sich in dem Wählhebelgehäuse abstützende Druckfeder den Sperrschieber in eine das Schiebestück freigebende Stellung verschiebt.

Der Erfindung liegt die Aufgabe zugrunde, eine Verriegelungsvorrichtung zwischen einem Zündschloß und dem Wählhebel eines automatischen Kraftfahrzeuggetriebes zu schaffen, die ein sicheres Verriegeln des Wählhebels in einer Parkstellung bei in Ruhestellung gedrehtem Zündschloß gewährleistet.

Die Lösung gelingt mit den Merkmalen des Patentanspruchs 1.

Vorteilhafte Ausgestaltungen sind in den Unteransprüchen genannt.

Der Sperrschieber weist eine Steuerrampe auf, die zur Verriegelung des Wählhebels einen in dem Gehäuse verschiebbar gelagerten Sperrbolzen in eine den Sperrstift am Wählhebel fixierte Stellung verschiebt. Infolgedessen kann die Taste nicht gedrückt werden und der Wählhebel die verriegelte Stellung nicht verlassen.

Vorteilhafterweise weist diese Vorrichtung eine sichere Koppelung zwischen Zündschloß und Wählhebel auf. Solange der Wählhebel nicht in einer Parkstellung steht, ist dessen Taste ungehindert betätigbar und das Zündschloß nicht in die Ruhestellung verdrehbar. Nach dem Verschwenken des Wählhebels mit gedrückter Taste in die Parkstellung kann zwar das Zündschloß in Richtung der Ruhestellung gedreht werden, erreicht diese jedoch nicht, da der Sperrbolzen mit dem Sperrstift kollidiert. Erst nach dem Lösen der Taste kann die Ruhestellung erreicht werden, wodurch die Steuerrampe den Sperrbolzen in eine den Sperrstift fixierende Stellung verschiebt.

In weiterer vorteilhafter Ausgestaltung wird in der Parkstellung die Betätigung der Taste über einen den Sperrschieber arretierenden Sperrbügel abgefragt. Dadurch wird verhindert, daß z.B. bei rechts gelenkten Kraftfahrzeugen mit einer Hand der Wählhebel bei betätigter Taste in der Parkstellung gehalten wird, wahrend mit der anderen Hand das Zündschloß mit dem Zündschlüssel in einer Stellung zwischen einer ersten Betriebsstellung und der Ruhestellung gehalten wird. Hierbei wäre ein Verschwenken des Wählhebels in eine Fahrstellung und ein anschließendes Abziehen des Zündschlüssels möglich. Der Sperrbügel gibt den Sperrschieber jedoch erst nach dem Lösen der Taste frei.

Die Erfindung wird anhand von Figuren beispielhaft näher erläutert.

Es zeigen:

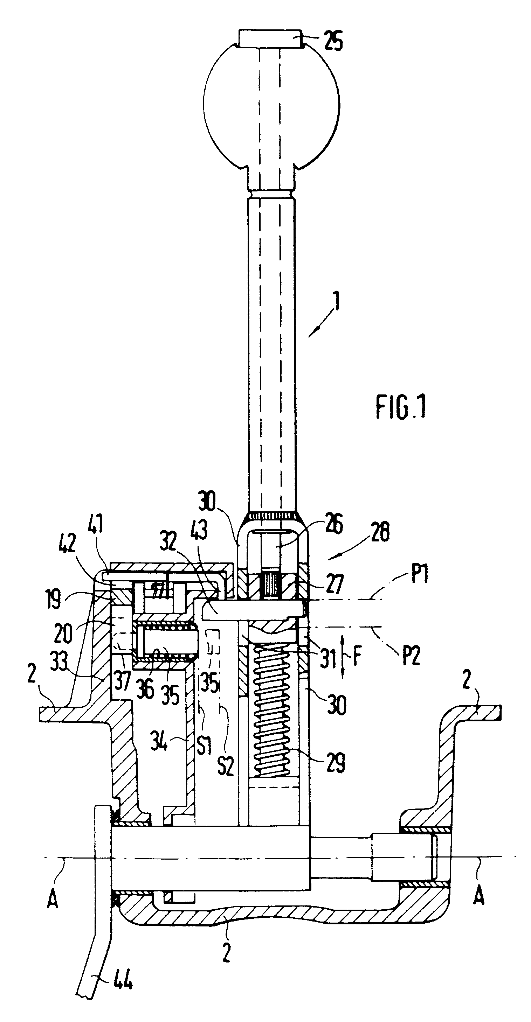

- Fig. 1: einen Schnitt entlang der Linie I-I gemäß Fig. 2,
- Fig. 2: eine Seitenansicht einer Verriegelungsvorrichtung und
- Fig. 3 A bis 3 C: einen Schnitt entlang der Linie III-III gemäß Fig. 2 mit einem Zündschloß in verschiedenen Stellungen.

Ein Wählhebel 1 für ein nicht gezeigtes, automatisches Kraftfahrzeuggetriebe ist um eine Achse A-A drehbar in einem Gehäuse 2 gelagert. Das Gehäuse 2 ist über ein flexibles Gestänge 3 mit einem in der Nähe eines nicht gezeigten Lenkrades angeordneten Zündschloß 4 verbunden. Dieses weist ein Gehäuse 5 auf, an dem das zündschloßseitige Ende 6 des Gestänges 3 gehalten ist. In dem Gehäuse 5 stützt sich eine auf einen mit dem Gestänge 3 verbundenen, in dem Gehäuse 5 verschiebbar gelagerten Schieber 7 mit einer ersten Federkraft K1 wirkende Feder 8 ab, die das Gestänge 3 auf Zug belastet.

In dem Gehäuse 5 ist eine gemeinsam mit einem Zündschlüssel 9 verdrehbare Scheibe 10 angeordnet, die eine Nocke 11 aufweist. Der Schieber 10 weist eine mit der Nocke 11 korrespondierende Aufnahme 12 auf. An dem wählhebelseitigen Ende 15 stützt sich eine mit einer zweiten Federkraft K2 versehene Feder 16 in einer Hülse 17 des Gehäuses 2 ab. Die Federkraft K2 ist größer als die Federkraft K1. Diese Feder 16 wirkt auf eine Scheibe 18, die in der Hülse 17 zur Längsführung des Sperrschiebers 19 verschiebbar und mit dem Gestänge 3 verbunden ist. Somit ist das Gestänge 3 beidseitig auf Zug belastet.

Die Scheibe 18 ist einstückig mit einem Sperrschieber 19 ausgebildet, der in dem Gehäuse 2 verschiebbar gelagert ist und eine Nocke 20 mit einer schrägen Steuerrampe 21 aufweist.

Der Wählhebel 1 weist an seinem oberen Ende eine manuell zu betätigende Taste 25 auf, welche über eine Stange 26 auf ein Gleitstück 27 wirkt, das im unteren, U-förmig gestalteten Ende 28 des Wählhebels 1 verschiebbar gelagert ist. Im nicht betätigten Zustand befindet sich das Gleitstück 27 durch eine Druckfeder 29 belastet in einer oberen Position P1, bei betätigter Taste 25 in einer unteren Position P2.

Die beiden Schenkel 30 des Endes 28 weisen Schlitze 31 auf, die von einem im Gleitstück 27 gelagerten Sperrstift 32 durchsetzt sind.

In einer zwischen einer seitlichen Gehäusewand 33 und dem Wählhebel 1 angeordneten Zwischenwand 34 ist ein verschiebbarer Sperrbolzen 35 parallel zu dem Sperrstift 32 angeordnet. Dieser Sperrbolzen 35 ist durch eine Druckfeder 36 in eine Stellung S1 vorgespannt und liegt dadurch mit einer Kappe 37 an der Gehäusewand 33 an.

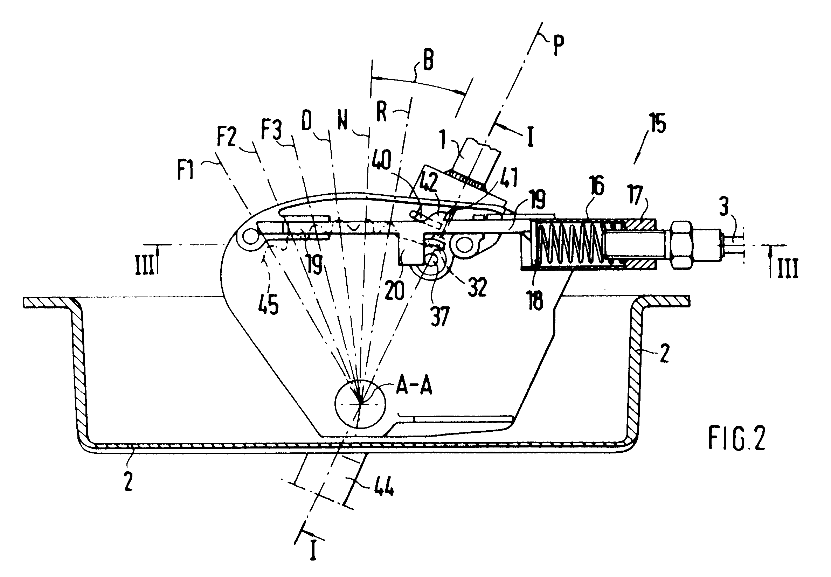

Oberhalb des Sperrschiebers 19 ist gemäß Figur 2 in dem Gehäuse 2 ein zweiarmiger, im Uhrzeigersinn federbelasteter Sperrbügel 40 schwenkbar gelagert. Ein Arm 41 des Sperrbügels 40 steht in den Sperrschieber 19 arretierender Anlage mit einer Nocke 42 und weist ein abgewinkeltes Stück 43 auf, welches in Anlage mit dem Sperrstift 32 steht.

Im Betrieb des Kraftfahrzeuges ist der Wählhebel 1 in Richtung des Bewegungspfeiles B um die Achse A-A in verschiedene Fahrstellungen D, F3, F2, F1, eine Neutralstellung N sowie eine Parkstellung P schwenkbar, wobei ein Hebel 44 mit dem nicht gezeigten Getriebe verbunden ist.

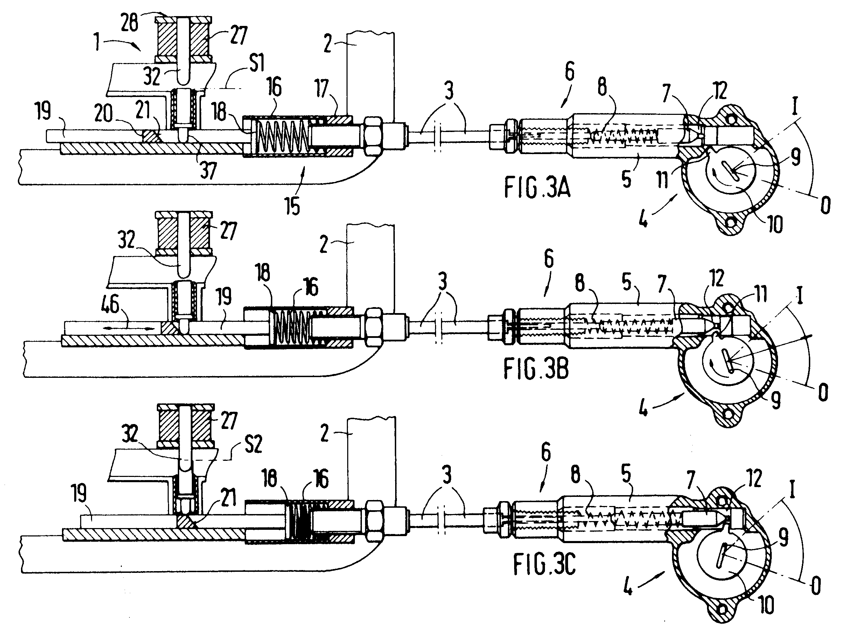

Der Zündschlüssel 9 befindet sich gem. Fig. 3 A im Zündschloß 4, welches in eine erste Betriebsstellung I verdreht ist. Die an dem Sperrschieber 19 angreifenden Feder 16 hält aufgrund der größeren Federkraft K2 den Schieber 7 in der ein Verdrehen der Scheibe 10 verhindernden Stellung sowie den Sperrschieber 19 in einer linken Endlage. Der Wählhebel 1 befindet sich in einer Fahrstellung oder der Neutralstellung N und steht nicht in Kontakt mit dem Sperrschieber 19. Der Sperrstift 32 kann ungehindert mittels der Taste 25 in Richtung eines Pfeiles F in die Position P1 bzw. P2 auf- bzw. abbewegt werden. Der Sperrstift 32 rastet dabei in einer entsprechenden Ausnehmung einer nur in Fig. 2 gestrichelt dargestellten Kulisse 45 ein.

Wird der Wählhebel 1 mit gedrückter Taste 25 in die Parkstellung P geschwenkt, so kommt er in Kontakt mit dem Sperrschieber 19 und verschiebt dabei in nicht näher gezeigter Weise diesen Schieber 19 gemäß Fig. 3B in eine mittlere Lage. Dabei bewegt sich die Steuerrampe 21 auf einer Bewegungsbahn 46 in Richtung auf Kappe 37 zu und ein Teil der Federkraft K2 wird von dem Wählhebel 1 aufgenommen, die Feder 16 somit bezüglich des Gestänges 3 entlastet. Infolgedessen wird aufgrund der Federkraft K 1 der Schieber 7 nach rechts verschoben, so daß die Nocke 11 in die Aufnahme 12 eingreifen kann. Das Zündschloß 7 kann in Richtung einer Ruhestellung 0 verdreht werden, erreicht diese bei betätigter Taste 25 aber nicht, da bei weiterem Drehen des Zündschlüssels 9 die Steuerrampe 21 den Sperrbolzen 35 gegen den Sperrstift 32 schiebt.

Um zu verhindern, daß bei beidhändigem und gleichzeitigem Betätigen von Wählhebel 1 und Zündschlüssel 4 in der Stellung gemäß Fig. 3 B der Wählhebel 1 mit gedrückter Taste 25 aus der Parkstellung P zurückgeschwenkt wird und das Zündschloß 4 in die das Abziehen des Zündschlüssels 9 gestattende Ruhestellung verdreht wird, befindet sich der Arm 31 in den Sperrschieber 19 arretierende Anlage mit der Nocke 42. Infolgedessen kann das Zündschloß 4 nicht weiter verdreht werden.

Erst nach dem Lösen der Taste 25 bringt der Sperrstift 32 über das Stück 43 den Arm 41 aus der den Sperrschieber 19 arretierenden Anlage mit der Nocke 42.

Das Zündschloß 4 kann nun in die Ruhestellung 0 verdreht werden, wobei die Steuerrampe 21 gemäß Fig. 3 B den Sperrbolzen 35 in eine zweite Stellung S2 unterhalb des Sperrstiftes 32 verschiebt. Der Sperrstift 32 ist dadurch fixiert und der Wählhebel 1 ist in der Parkstellung verriegelt. Die Taste 25 ist nicht drückbar und der Zündschlüssel 9 ist abziehbar.

Soll das Kraftfahrzeug in Betrieb genommen werden, so gibt nach dem Einführen des Zündschlüssels 9 in das Zündschloß 4 ein geringes Verdrehen des Zündschlüssels 9 in Richtung Betriebsstellung I das Gestänge 3 frei, so daß die Federkraft K2 den Sperrschieber 19 in die mittlere Lage gemäß Fig. 3 B bringt und die Steuerrampe 21 den Sperrbolzen 35 in die Stellung S1 freigibt.

## Patentansprüche

1. Verriegelungsvorrichtung zwischen einem Zündschloß (4) und dem Wählhebel (1) eines automatischen Kraftfahrzeuggetriebes, wobei der Wählhebel (1) in einem Gehäuse (2) in verschiedene Stellungen schwenkbar gehalten ist und in einer Parkstellung (P) mit einem in eine Ausnehmung einer Kulisse (45) greifenden, mittels einer Taste (25) manuell verschiebbaren Sperrstiftes (32) sperrbar ist, und mit einem Sperrschieber (19), der über ein flexibles Gestänge (3) derart mit dem Zündschloß (4) zusammenwirkt, daß einerseits der Zündschlüssel nur in der Ruhestellung des Zündschlosses (4) abziehbar ist, wenn sich der Wählhebel (1) in Parkstellung (P) befindet und die Taste (25) nicht betätigt ist, wobei der Sperrschieber (19) das Verschieben des Sperrstiftes (32) verhindert, andererseits der Wählhebel (1) in der Parkstellung (P) verriegelt ist, bis der Zündschlüssel in Richtung einer ersten Betriebsstellung gedreht wurde, wodurch der Sperrschieber (19) den Sperrstift (32) freigibt, **dadurch gekennzeichnet,** daß der Sperrschieber (19) eine Steuerrampe (21) aufweist und in dem Gehäuse (2) ein verschiebbarer Sperrbolzen (35) angeordnet ist,
und daß bei verriegeltem Wählhebel (1) der Sperrbolzen (35) mittels der Steuerrampe (21) in eine den Sperrstift (32) fixierende Stellung (S2) verschoben angeordnet ist.

2. Vorrichtung nach Anspruch 1, **dadurch gekennzeichnet,** daß bei unverriegeltem Wählhebel (1) der Sperrbolzen (35) federbelastet in einer den Sperrstift (32) freigegebenen Stellung (S1) und in der Bewegungsbahn (46) des die Steuerrampe (21) tragenden Sperrschiebers (19) angeordnet ist.

3. Vorrichtung nach Anspruch 1, **dadurch gekennzeichnet,** daß der Sperrschieber (19) zur Längsführung endseitig mit einer Scheibe (18) versehen ist, welche in einer gehäuseseitigen Hülse (17) verschiebbar gelagert und mit dem Gestänge (3) verbunden ist.

4. Vorrichtung nach Anspruch 1, **dadurch gekennzeichnet,** daß an dem zündschloßseitigen Ende (6) des Gestänges (3) ein Schieber (7) angeordnet ist, an dem eine sich in einem Gehäuse (5) abstützende, das Gestänge (3) auf Zug belastende, mit einer ersten Federkraft wirkende Feder (8) angreift, und daß sich am wählhebelseitigen Ende (15) eine auf den Sperrschieber (19) mit einer zweiten Federkraft wirkende Feder (16) das Gestänge (3) auf Zug belastend abstützt, wobei die erste Federkraft geringer ausgelegt ist als die zweite Federkraft

5. Vorrichtung nach Anspruch 2, **dadurch gekennzeichnet,** daß an dem Sperrschieber (19) eine Nocke (42) angeordnet ist, welche bei betätigter Taste (25) mit einem in dem Gehäuse (2) schwenkbar gelagerten Sperrbügel (40) den Sperrschieber (19) arretierend in Anlage steht.

## Claims

1. A locking device between an ignition lock (4) and the selector lever (1) of an automatic motor-vehicle transmission, wherein the selector lever (1) is held in a housing (2) so as to be pivotable into various positions and is lockable in a parking position (**P**) by a locking pin (32) engaging in a recess in a slotted guide (45) and displaceable manually by means of a button (25), and with a locking slide (19) cooperating with the ignition lock (4) by way of a flexible rod (3) in such a way that on the one hand the ignition key can be withdrawn only in the rest position of the ignition lock (4), when the selector lever (1) is in the parking position (**P**) and the button (25) is not actuated, the locking slide (19) preventing the locking pin (32) from being displaced, and on the other hand the selector lever (1) is locked in the parking position (**P**) until the ignition key has been turned in the direction of a first operating position, as a result of which the locking slide (19) releases the locking pin (32), **characterized in that** the locking slide (19) comprises a control ramp (21) and a displaceable locking bolt (35) is arranged in the housing (2), and when the selector lever (1) is locked the locking bolt (35) is arranged displaced by means of the control ramp (21) into a position (**S2**) fixing the locking pin (32).

2. A device according to Claim 1, **characterized in that** when the selector lever (1) is unlocked the locking bolt (35) is arranged spring-loaded in a position (**S1**) releasing the locking pin (32) and in the path of movement (46) of the locking slide (19) supporting the control ramp (21).

3. A device according to Claim 1, **characterized in that** for lateral guidance the end of the locking slide (19) is provided with a disc (18) mounted displaceably in a sleeve (17) on the housing and connected to the rod (3).

4. A device according to Claim 1, **characterized in that** a slide (7) on which a spring (8) engages is arranged on the end (6) of the rod (3) towards the ignition lock, the spring (8) being supported in a housing (5) and stressing the rod (3) and acting with a first spring force, and a spring (16) acting upon the locking slide (19) with a second spring force is supported on the end (15) towards the selector lever so as to stress the rod (3), wherein the first spring force is arranged to be less than the second spring force.

5. A device according to Claim 2, **characterized in that** a cam (42) is arranged on the locking slide (19), the cam (42) resting on a locking yoke (40) mounted pivotably in the housing (2) so as to lock the locking slide (19) when the button (25) is actuated.

## Revendications

1. Dispositif de verrouillage entre une serrure de contact (4) et le levier de sélection (1) d'une boîte de vitesses automatique d'un véhicule automobile, le levier de sélection (1) étant maintenu pivotant dans différentes positions, dans un boîtier (2) et pouvant être bloqué dans une position de garage (P) avec une broche de blocage (32) s'engageant dans un évidement d'une coulisse (45), déplaçable manuellement au moyen d'une touche (25), et avec un coulisseau de blocage (19) qui coopère, par l'intermédiaire d'une tringlerie (3) flexible, avec la serrure de contact (4) de manière que d'une part la clé de contact ne puisse être retirée que dans la position de repos de la serrure (4), lorsque le levier de sélection (1) se trouve dans la position de garage (P) et la touche (25) n'est pas actionnée, le coulisseau de blocage (19) empêchant le déplacement de la broche de blocage (32), d'autre part le levier de sélection (1) est verrouillé dans la position de garage (P) jusqu'à ce que la clé de contact soit tournée en direction d'une première position de fonctionnement, ce qui fait que le coulisseau de blocage (19) libère la broche de blocage (32), caractérisé en ce que le coulisseau de blocage (19) présente une rampe de commande (21) et dans le boîtier (2) est prévue une tige de blocage (35) coulissante, et en ce que lorsque le levier de sélection (1) est verrouillé, la tige de blocage (35) est déplacée au moyen de la rampe de commande (21) dans une position (S2) fixant la broche de blocage (32).

2. Dispositif selon la revendication 1, caractérisé en ce que lorsque le levier de sélection (1) est déverrouillé, la tige de blocage (35) est soumise à l'action d'un ressort dans une position (S1) libérant la broche de blocage (32) et est placée dans la trajectoire (46) du coulisseau de blocage (19), portant la rampe de commande (21).

3. Dispositif selon la revendication 1, caractérisé en ce que le coulisseau de blocage (19) est pourvu pour le guidage longitudinal , à une extrémité, d'un disque (18) qui est monté coulissant dans un manchon (17) côté boîtier et qui est relié avec la tringlerie (3).

4. Dispositif selon la revendication 1, caractérisé en ce qu'à l'extrémité (6) côté serrure de contact de la tringlerie (3) il est prévu une pièce coulissante (7) sur laquelle agit un ressort (8), agissant avec une première force de ressort, prenant appui dans un boîtier (5), sollicitant en traction la tringlerie (3), et en ce qu'à l'extrémité (15) côté levier de sélection un ressort (16), agissant avec une seconde force de ressort sur le coulisseau de blocage (19), soutient la tringlerie (3) en la sollicitant en traction, la première force de ressort étant inférieure à la seconde force de ressort.

5. Dispositif selon la revendication 2, caractérisé en ce que sur le coulisseau de blocage (19) est prévue une came (42) qui lorsque la touche (25) est actionnée, est en application avec un étrier de blocage (40), monté pivotant dans le boîtier (2), de manière à bloquer le coulisseau de blocage (19).
